# EUROPÄISCHE PATENTSCHRIFT

(11) **EP 2 906 372 B1**
(45) Veröffentlichungstag und Bekanntmachung des Hinweises auf die Patenterteilung: **24.03.2021**
(21) Anmeldenummer: 13765948.8
(22) Anmeldetag: 17.09.2013
(51) Int. Cl.: B21D 39/00, B21D 51/24, B23P 11/00, E05F 3/00, F16J 13/00

(54) **VERFAHREN ZUM VERSCHLIESSEN EINER ÖFFNUNG IN EINEM TÜRBETÄTIGER**
METHOD FOR CLOSING AN OPENING IN A DOOR ACTUATOR
PROCÉDÉ DE FERMETURE D'UNE OUVERTURE MÉNAGÉE DANS UN ACTIONNEUR DE PORTE

(30) Priorität: 10.10.2012 DE 102012109623
(43) Veröffentlichungstag der Anmeldung: 19.08.2015
(73) Patentinhaber: dormakaba Deutschland GmbH, 58256 Ennepetal (DE)
(72) Erfinder: HELLWIG, Alexander, 58256 Ennepetal (DE)
(74) Vertreter: Balder IP Law, S.L.
(86) Internationale Anmeldenummer: PCT/EP2013/002794
(87) Internationale Veröffentlichungsnummer: WO 2014/056569

(56) Entgegenhaltungen:
- DE-A1- 4 343 585
- DE-A1-102006 024 767
- DE-A1-102010 017 570
- GB-A- 312 752

## Beschreibung

Die vorliegende Erfindung betrifft ein Verfahren zum Verschließen einer Öffnung in einem Gehäuse eines Türbetätigers, gemäss den Merkmalen des Oberbegriffs des Patentanspruchs 1 sowie einen Türbetätiger gemäss den Merkmalen des Oberbegriffs des Patentanspruchs 6.

Eine solche zu verschließende Öffnung ist im Gehäuse eines Türbetätigers zur Betätigung einer Tür vorhanden, um einen Innenraum des Gehäuses druckdicht zu verschließen. Hierfür wird bei der Montage nach der Anordnung verschiedener mechanischer Komponenten im Innenraum des Gehäuses und nach Befüllen des Innenraums mit einem Druckmittel das Verschlusselement in der Öffnung eingesetzt, das den Innenraum des Gehäuses druckdicht verschließt. Das Verschlusselement ist dabei gewöhnlich als Verschlussschraube ausgeführt.

### STAND DER TECHNIK

Die DE 20 2008 008 921 U1 zeigt einen Türbetätiger zur Betätigung einer Drehtür mit einem Gehäuse, in dem endseitig eine Öffnung in Form einer zylindrischen Tasche ausgebildet ist. In diese zylindrische Tasche kann eine Verschlussschraube eingeschraubt werden, um den Innenraum des Gehäuses des Türschließers druckdicht zu verschließen.

Grundsätzlich kann mit einem Verschlusselement in Form einer Schraube ein Dichtelement so vorteilhaft in der Öffnung des Körpers angebracht werden, dass eine hinreichende Dichtwirkung entsteht. Nachteilhafterweise ist jedoch sowohl am Verschlusselement als auch in der Öffnung des Körpers ein Gewinde erforderlich, das erhöhte Herstellungskosten verursacht. Zudem besteht ein weiterer Nachteil darin, dass bei der Montage des Türbetätigers der Arbeitsgang des Einschraubens der Verschlussschraube in das Gehäuse des Türbetätigers eine gewisse Zeit in Anspruch nimmt, die in Bezug auf eine Jahresmenge von Türbetätigern erhebliche Montagekosten aufkommen lässt.

Die DE 10 2010 017 570 A1 auf welche der Oberbegriff der Patentansprüche 1 und 6 basiert zeigt eine weitere Verschlussanordnung zum Verschließen einer Öffnung im Gehäuse eines Türbetätigers, und es wird als Verschlusselement die Verwendung eines gewölbten Deckels vorgeschlagen, der unter plastischer Verformung in der Öffnung angeordnet wird, um den Innenraum druckdicht zu verschließen. Der Deckel besitzt eine gewölbte Fläche, gegen die ein Werkzeug wirkt, um die gewölbte Fläche plan zu drücken. Dabei vergrößert sich der Außendurchmesser des Verschlusselementes und gelangt in eine umlaufende Nut, sodass das Verschlusselement in der Öffnung durch Eingriff in die Nut selbsthaltend angeordnet wird. Weiterführend wird vorgeschlagen, vor dem Einsetzen des Verschlusselementes ein Dichtelement in die Nut einzubringen, sodass nach plastischer Verformung der gewölbten Fläche des Deckels das Dichtelement dichtend in der Nut einsitzt, in die unter radialer Aufweitung auch der Außenrand des Verschlusselementes eingerückt ist.

Bei Aufbau eines erhöhten Innendrucks im Innenraum des Gehäuses des Türbetätigers kann jedoch das Verschlusselement nicht sicher in der Öffnung des Körpers halten, und es können Leckagen entstehen, die zu einem Druckverlust im Innenraum des Gehäuses führen können und folglich zu vermeiden sind. Wird ein plastisch verformbares Verschlusselement mit einer mittigen, gewölbten Fläche in Form eines Deckels vorgesehen, so kann gegebenenfalls keine hinreichende Dichtwirkung erzielt werden.

### OFFENBARUNG DER ERFINDUNG

Aufgabe der Erfindung ist die Schaffung eines einfachen Verfahrens zum Verschließen einer Öffnung in einem Körper sowie eine Verschlussanordnung hierzu, wobei die Öffnung mit dem Verfahren bzw. durch die Verschlussanordnung auf einfache Weise druckdicht verschlossen wird.

Diese Aufgabe wird mit einem Verfahren gemäß den Merkmalen des Patentanspruchs 1 sowie mit einem Türbetätiger gemäß den Merkmalen des Patentanspruchs 6 gelöst. Vorteilhafte Weiterbildungen der Erfindung sind in den abhängigen Ansprüchen angegeben.

Erfindungsgemäß sieht das Verfahren zunächst die Bereitstellung des Verschlusselementes mit einer topfförmigen Ausbildung vor, sodass das Verschlusselement einen Boden und einen umlaufenden sich aus der Erstreckungsebene des Bodens abstreckenden Rand aufweist, wobei ferner die Ausbildung der Öffnung mit einer in die Öffnung einragenden Umlaufkante vorgesehen ist, hinter der ein Hinterschneidungsbereich gebildet wird und es ist das Fügen des Verschlusselementes in die Öffnung so vorgesehen, dass der Boden nach innen weist und schließlich umfasst das Verfahren den Schritt des Aufweitens des umlaufenden Randes in den Hinterschneidungsbereich.

Durch die vorteilhafte Ausführung des Verschlusselementes zur formschlüssigen Anordnung in der Öffnung entsteht der Vorteil, dass das Verschlusselement auf einfache Weise in der Öffnung angeordnet werden kann, wobei die Verschlussanordnung durch das Verschlusselement bereits druckdicht ausgeführt werden kann. Baut sich im Innenraum des Gehäuses des Türbetätigers ein Überdruck auf, so wirkt dieser gegen den Boden des Verschlusselementes, und der in den Hinterschneidungsbereich geführte Rand des Verschlusselementes leitet die durch den Druck in den Boden eingeleitete Kraft in die Umlaufkante der Öffnung ab. Die Umlaufkante kann die Öffnung im Gehäuse des Türbetätigers nach außen beranden, sodass das Verschlusselement in der Öffnung vollständig formschlüssig einsitzt.

Vor der Verformung des umlaufenden Randes des Verschlusselementes weist dieses beispielsweise eine zylindrische Form mit einem Außendurchmesser auf, der kleiner ist als der Innendurchmesser der Öffnung, der durch die nach innen einragende Umlaufkante bestimmt ist.

Die Offnung im Gehäuse des Türbetätigers kann vorzugsweise rotationssymmetrisch ausgeführt sein. Neben einer runden Öffnung kann diese jedoch durch jede weitere, beliebige Form bestimmt sein. Beispielsweise kann die Öffnung elliptisch, dreieckig, viereckig, insbesondere rechteckig oder vieleckig ausgeführt sein. Das Einführen des umlaufenden Randes in den Hinterschneidungsbereich der Öffnung bleibt dabei von der Konturform der Öffnung beeinflusst.

Mit besonderem Vorteil kann das Aufweiten des umlaufenden Randes unter plastischer Formänderung ausgeführt werden. Hierzu kann ein Werkzeug bereitgestellt werden, mit dem der umlaufende Rand aufgeweitet wird, insbesondere nachdem das Verschlusselement in die Öffnung eingesetzt wurde und indem das Werkzeug anschließend in das topfförmige Verschlusselement eingepresst wird. Der Rand des Verschlusselementes kann vor Einwirkung des Werkzeugs zylindrisch sein, um durch die Öffnung im Gehäuse des Türbetätigers zu passen. Ist das Verschlusselement in der Öffnung angeordnet, kann das Werkzeug von der Randinnenseite gegen den umlaufenden Rand wirken, um diesen aufzuweiten und in den Hinterschneidungsbereich zu führen. Das Werkzeug kann dabei eine Kontur aufweisen, die bereits der Kontur des eingepressten Verschlusselementes entspricht. Dabei wirkt das Werkzeug insbesondere vollumfänglich gegen den Rand, sodass dieser durch axiale Nachführung des Werkzeugs in die Öffnung hinein die erforderliche Aufweitung erfährt.

Um eine zufriedenstellende Abdichtung der Öffnung durch das Verschlusselement zu erreichen, kann das Verfahren die Bereitstellung eines Dichtelementes umfassen, das vor dem Fügen des Verschlusselementes in der Öffnung eingesetzt wird. Die Öffnung kann eine sich an die Umlaufkante nach innen anschließende Kontur aufweisen, die etwa der Kontur des aufgeweiteten Randes entspricht, sodass sich diese an die Außenkontur anlegen kann. Beispielsweise kann die sich anschließende Kontur einen Kegelabschnitt bilden, und das Dichtelement kann in der unteren Kehle des Kegelabschnittes im Übergang an einen Bodenabschnitt der Öffnung eingesetzt werden. Alternativ kann das Dichtelement auch als Dichtband ausgeführt sein, das der Kontur zwischen dem Bodenabschnitt und der Umlaufkante angepasst sein kann, und ebenfalls vor dem Fügen des Verschlusselementes in der Öffnung eingesetzt wird. Ist das Dichtelement als O-Ringdichtung ausgeführt, so kann dieses entweder im Übergang des Bodenabschnittes zur Außenkontur oder im Hinterschneidungsbereich eingesetzt werden, sodass das Dichtelement zwischen dem Rand und der Umlaufkante in den Hinterschneidungsbereich eingepresst wird. Auch ist es denkbar, in der Kontur der Öffnung eine Nut einzubringen, beispielsweise durch ein spanendes Verfahren, in die ein beispielsweise O-ringförmiges Dichtelement oder ein Dichtband eingesetzt werden kann. Wird anschließend das Verschlusselement eingesetzt und der Rand aufgeweitet, so wird dieser außenseitig gegen das in der Nut eingesetzte Dichtelement verpresst.

Das Verfahren bietet den Vorteil einer einfachen Herstellung der Verschlussanordnung, wobei bereits die Mittel zum Verschluss der Öffnung auf einfache Weise bereitgestellt werden können. Beispielsweise kann das topfförmige Verschlusselement aus einem Blechmaterial tiefgezogen werden, um dieses mit dem Boden und dem umlaufenden Rand auszubilden. Beim Tiefziehen kann der Rand aus dem zunächst planen Blech aus dem Randbereich des Bodens abgestreckt werden, beispielsweise unter Bildung eines zylindrischen Abschnittes. Auch ist es vorteilhaft, dass die Öffnung und die die Öffnung berandende Umlaufkante mit dem Hinterschneidungsbereich im Gehäuse des Türbetätigers durch ein Gussverfahren oder durch ein spanendes Verfahren eingebracht wird. Das Verfahren zur Bildung einer Verschlussanordnung zum Verschließen einer Öffnung in einem Körper kann besonders vorteilhaft zur Verschließung des Gehäuses eines Türbetätigers angewendet werden. Dabei bildet das Gehäuse des Türbetätigers den Körper mit der Öffnung, wobei durch das Verschlusselement ein insbesondere mit einem Druckmittel befüllter Innenraum des Türbetätigers druckdicht verschlossen wird. Das Verschlusselement und die erfindungsgemäße Anordnung des Verschlusselementes in der Öffnung kann dabei eine Verschlussschraube ersetzen, die die Öffnung gewöhnlich verschließt und in diese eingeschraubt werden muss.

Die vorliegende Erfindung richtet sich ferner auf einen Türbetätiger mit den Merkmalen des Patentanspruchs 6.

Von der Außenseite der Öffnung im Gehäuse des Türbetätigers ist folglich das Verschlusselement mit dem Boden und dem umlaufenden Rand sichtbar, wobei der Boden nach innen in die Öffnung weist und wobei sich der umlaufende Rand gegen den Hinterschneidungsbereich der Öffnung abstützt, die durch eine nach innen weisende Umlaufkante in Erscheinung tritt.

Das Verschlusselement kann aus einem metallischen Material ausgebildet sein, und der umlaufende Rand kann unter plastischer Formänderung des Verschlusselementes in den Hinterschneidungsbereich geführt sein.

Zwischen der Öffnung und dem Verschlusselement kann mit weiterem Vorteil ein Dichtelement angeordnet sein, das insbesondere als O-Ringdichtung ausgebildet ist. Alternativ kann die Verschlussanordnung ein Dichtband aufweisen, das sich im Bereich der Kontur zwischen der Umlaufkante und dem Bodenabschnitt der Öffnung erstreckt und den Rand des Verschlusselementes außenseitig umschließt.

Mit besonderem Vorteil kann der Innenraum des Gehäuses des Türbetätigers mit einem Druckmittel befüllt sein.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Ansicht des Gehäuses eines Türbetätigers mit der Öffnung, die sich in einem nicht verschlossenen Zustand durch ein Verschlusselement und ein Dichtelement befindet,
- Figur 1a: eine Detailansicht der Öffnung im Gehäuse des Türbetätigers,
- Figur 2: eine Ansicht des Gehäuses des Türbetätigers mit dem in die Öffnung eingesetzten Verschlusselement,
- Figur 3: den Verfahrensschritt des Aufweitens des Randes des Verschlusselementes mittels einem Werkzeug und
- Figur 4: die Ansicht des Gehäuses des Türbetätigers mit der durch das Verschlusselement verschlossenen Öffnung.

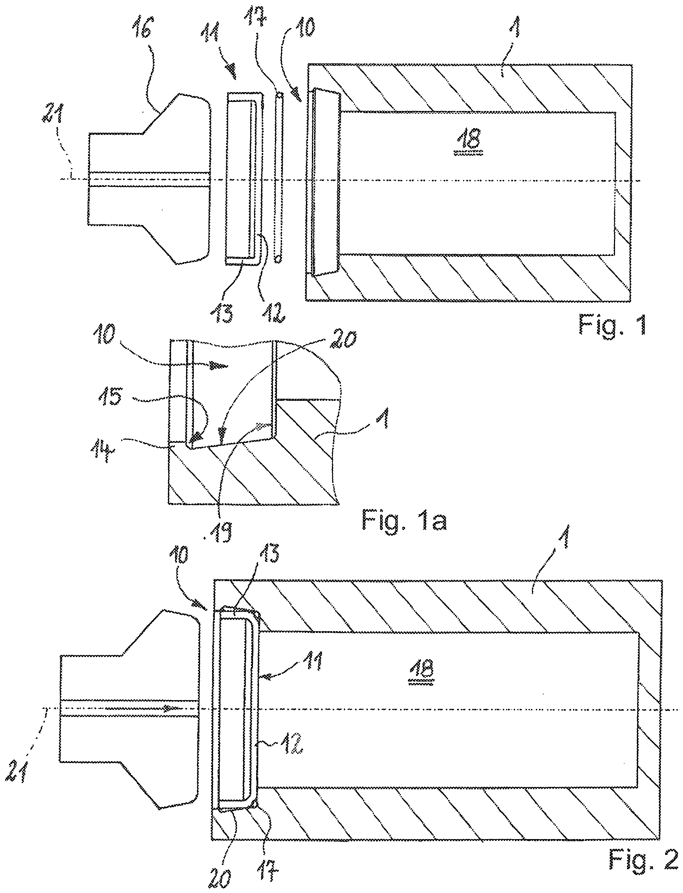

Figur 1 zeigt eine Verschlussanordnung zum Verschließen einer Öffnung 10 in einem Gehäuse 1 eines Türbetätigers, der am Türsturz oder am Türblatt einer Tür befestigt werden kann und zur Betätigung des Türblattes dient.

Die Öffnung 10 ist beispielhaft rund ausgeführt und erstreckt sich um eine Längsachse 21. Im Gehäuse 1 des Türbetätigers ist ein Innenraum 18 ausgebildet, der durch die Öffnung 10 zugänglich ist.

Zur Ausführung des Verfahrens zum Verschließen der Öffnung 10 werden ein Verschlusselement 11 und ein Dichtelement 17 bereitgestellt, die unmontiert vor der Öffnung 10 angeordnet gezeigt sind. Das Verfahren zum Fügen des Verschlusselementes 11 in der Öffnung 10 wird durch ein Werkzeug 16 ausgeführt, das ebenfalls in Anordnung vor dem Verschlusselement 11 gezeigt ist.

Das Verschlusselement 11 ist als metallisches Tiefziehbauteil ausgebildet und besitzt einen Boden 12 und einen umlaufenden Rand 13, der vom Boden 12 abgestreckt ist und im unverformten Zustand etwa zylindrisch ausgebildet ist. Das gezeigte Dichtelement 17 ist als O-Ringdichtung ausgeführt.

Die Öffnung 10 weist wie in Figur 1a gezeigt eine Umlaufkante 14 auf, hinter der ein Hinterschneidungsbereich 15 ausgebildet ist. An den Hinterschneidungsbereich 15 schließt sich eine Kontur 20 an, die sich in Richtung eines Bodenabschnittes 19 im Durchmesser verjüngt. Der Bodenabschnitt 19 bildet lediglich einen planen, umlaufenden Rand, der im weiteren Verlauf des Gehäuses 1 des Türbetätigers in den Innenraum 18 übergeht.

In Zusammenhang mit den folgenden Figuren 2, 3 und 4 wird das erfindungsgemäße Verfahren zum Verschließen der Öffnung 10 mit dem Verschlusselement 11 beschrieben.

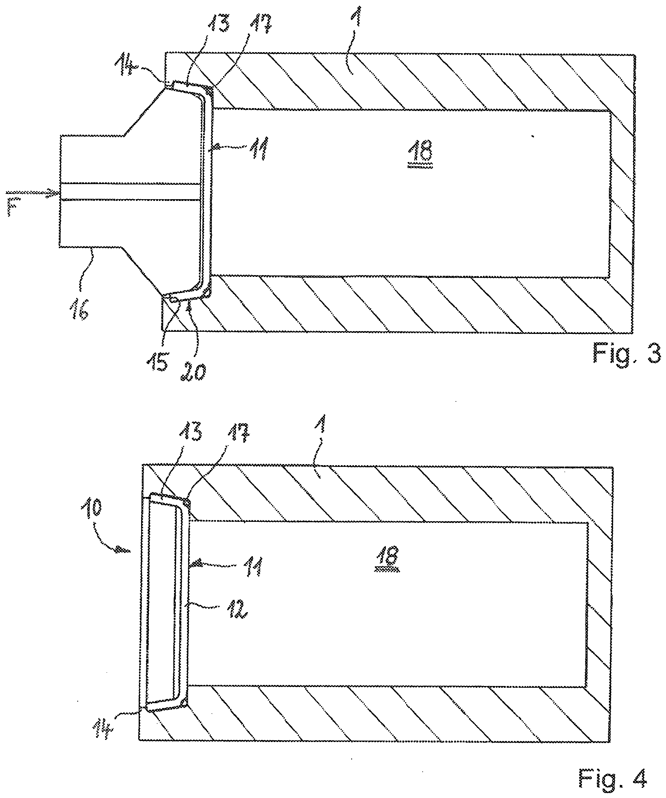

Figur 2 zeigt das Gehäuse 1 des Türbetätigers mit dem Verschlusselement 11, das mit dem Dichtelement 17 bereits in die Öffnung 10 eingesetzt ist. Dabei ist erkennbar, dass sich der umlaufende Rand 13 noch in zylindrischer Weise vom vom Boden 12 des Verschlusselementes 11 abstreckt, und folglich nicht an der Kontur 20 der Öffnung 10 anliegt. Der umlaufende Rand 13 weist durch seine noch zylindrische Form einen Außendurchmesser auf, der es erlaubt, das Verschlusselement 11 durch die nach innen ragende Umlaufkante 14 hindurchzuführen, die einen gleichen oder geringfügig größeren Durchmesser aufweist als die Außenseite des umlaufenden Randes 13. Anschließend wird das Werkzeug 16 in das Verschlusselement 11 durch eine mit einem Pfeil angedeutete Bewegung entlang der Längsachse 21 eingepresst, wie in der folgenden Figur 3 gezeigt.

Figur 3 zeigt das Gehäuse 1 des Türbetätigers mit dem Verschlusselement 11 und dem Dichtelement 17, wobei das Werkzeug 16 unter Aufbringung einer Presskraft F in das Verschlusselement 11 eingepresst wird. Dabei weitet sich der umlaufende Rand 13 so auf, dass dieser hinter die Umlaufkante 14 gelangt und sich im durch diesen gebildeten Hinterschneidungsbereich 15 festsetzt.

Wird das Werkzeug 16 wieder entnommen, nachdem der umlaufende Rand 13 hinter die Umlaufkante 14 gepresst ist, so entsteht die fertige Verschlussanordnung gemäß Figur 4. Der Innenraum 18 des Gehäuses 1 des Türbetätigers ist insbesondere über das Dichtelement 17 druckdicht verschlossen, und wenn ein Überdruck im Innenraum 18 gegen den Boden 12 wirkt, so verbleibt der umlaufende Rand 13 in einer sicher haltenden Anordnung hinter der Umlaufkante 14. Insbesondere wird bei einer Druckbelastung aus dem Innenraum 18 gegen den Boden 12 der umlaufende Rand 13 vorzugsweise aufgeweitet, sodass auch bei einer elastischen, beispielsweise aber auch bei einer leicht plastischen Verformung des Verschlusselementes 11, sichergestellt ist, dass dieses nicht aus der Öffnung 10 gelangt. Das Dichtelement 17 wird durch das Einsetzen des Verschlusselementes 11 in der gezeigten Anordnung leicht gequetscht, sodass es seine Dichtwirkung erfüllen kann, ohne Schaden zu nehmen.

In Zusammenhang mit den vorbeschriebenen Figuren 1 bis 4 umschließt das Gehäuse 1 des Türbetätigers den Innenraum 1. Das Gehäuse 1 des Türbetätigers ist lediglich schematisiert gezeigt und kann das Gehäuse eines Türbetätigers bilden, wobei die Öffnung 10 eine endseitige Verschlussöffnung bildet, über die eine Schließmechanik in den Türbetätiger eingesetzt wird und wobei der Innenraum 18 mit Drucköl aufgefüllt wird, bevor die Öffnung 10 mit dem Verschlusselement 11 verschlossen wird.

Die Erfindung beschränkt sich in ihrer Ausführung nicht auf das vorstehend angegebene bevorzugte Ausführungsbeispiel. Vielmehr ist im Rahmen der beigefügten Ansprüche eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumliche Anordnungen, können sowohl für sich als auch in den verschiedensten Kombinationen erfindungswesentlich sein.

### Bezugszeichenliste

- 1: Gehäuse des Türbetätigers
- 10: Öffnung
- 11: Verschlusselement
- 12: Boden
- 13: umlaufender Rand
- 14: Umlaufkante
- 15: Hinterschneidungsbereich
- 16: Werkzeug
- 17: Dichtelement
- 18: Innenraum
- 19: Bodenabschnitt
- 20: Kontur
- 21: Längsachse
- F: Presskraft

## Patentansprüche

1. Verfahren zum Verschließen einer Öffnung (10) in einem Gehäuse (1) eines Türbetätigers, wofür ein Verschlusselement (11) vorgesehen wird, das in die Öffnung (10) eingesetzt wird, **dadurch gekennzeichnet, dass** das Verfahren die folgenden Schritte umfasst:
- Bereitstellen des Verschlusselementes (11) mit einer topfförmigen Ausbildung, sodass das Verschlusselement (11) einen Boden (12) und einen umlaufenden sich aus der Erstreckungsebene des Bodens (12) abstreckenden Rand (13) aufweist,
- Ausbilden der Öffnung (10) mit einer in die Öffnung (10) einragenden Umlaufkante (14), hinter der ein Hinterschneidungsbereich (15) gebildet wird und
- Fügen des Verschlusselementes (11) in die Öffnung (10), sodass der Boden (12) nach innen weist und
- Aufweiten des umlaufenden Randes (13) in den Hinterschneidungsbereich (15), sodass
- durch das Verschlusselement (11) ein Innenraum (18) des Türbetätigers druckdicht verschlossen wird.

2. Verfahren nach Anspruch 1, **dadurch gekennzeichnet, dass** das Aufweiten des umlaufenden Randes (13) unter plastischer Formänderung ausgeführt wird.

3. Verfahren nach Anspruch 1 oder 2, **dadurch gekennzeichnet, dass** ein Werkzeug (16) bereitgestellt wird, mit dem der umlaufende Rand (13) aufgeweitet wird, insbesondere indem das Werkzeug (16) in das topfförmige Verschlusselement (11) eingepresst wird.

4. Verfahren nach einem der Ansprüche 1 bis 3, **dadurch gekennzeichnet, dass** ein Dichtelement (17) bereitgestellt wird, das vor dem Fügen des Verschlusselementes (11) in der Öffnung (10) eingesetzt wird.

5. Verfahren nach einem der vorgenannten Ansprüche, **dadurch gekennzeichnet, dass** zum Bereitstellen des topfförmigen Verschlusselementes (11) ein Blech tiefgezogen wird, um dieses mit dem Boden (12) und dem umlaufenden Rand (13) auszuführen und/oder dass die die Öffnung (10) berandende Umlaufkante (14) mit dem Hinterschneidungsbereich (15) im Gehäuse (1) des Türbetätigers durch ein Gussverfahren oder durch ein spanendes Verfahren eingebracht wird.

6. Türbetätiger mit einem Gehäuse (1), in dem eine Öffnung (10) eingebracht ist und wobei ein Verschlusselement (11) zum Einsetzen in die Öffnung (10) vorgesehen ist, **dadurch gekennzeichnet,**
- **dass** das Verschlusselement (11) topfförmig ausgebildet ist und einen Boden (12) und einen umlaufenden sich aus der Erstreckungsebene des Bodens (12) abstreckenden Rand (13) aufweist, und
- **dass** die Öffnung (10) eine in diese einragende Umlaufkante (14) aufweist, hinter der ein Hinterschneidungsbereich (15) gebildet ist,
- wobei das Verschlusselement (11) mit dem Boden nach innen weisend in die Öffnung (10) eingefügt ist und wobei der umlaufende Rand (13) durch ein Aufweiten in den Hinterschneidungsbereich (15) geführt ist.

7. Türbetätiger nach Anspruch 6, **dadurch gekennzeichnet, dass** das Verschlusselement (11) aus einem metallischen Material ausgebildet ist, wobei der umlaufende Rand (13) unter plastischer Formänderung des Verschlusselementes (11) in den Hinterschneidungsbereich (15) geführt ist.

8. Türbetätiger nach Anspruch 6 oder 7, **dadurch gekennzeichnet, dass** zwischen der Öffnung (10) und dem Verschlusselement (11) ein Dichtelement (17) angeordnet ist, das insbesondere als O-Ringdichtung ausgebildet ist.

9. Türbetätiger nach einem der Ansprüche 6 bis 8, **dadurch gekennzeichnet, dass** durch das Verschlusselement (11) ein insbesondere mit einem Druckmittel befüllter Innenraum (18) des Türbetätigers druckdicht verschlossen ist.

## Claims

1. A method for closing an opening (10) in a housing (1) of a door actuator, a closing element (11) being provided therefore, which is inserted into the opening (10), **characterized in that** the method comprises the following steps:
- providing the closing element (11) with a pot-shaped formation such that the closing element (11) includes a bottom (12) and a surrounding border (13) projecting from the extension plane of the bottom (12),
- forming the opening (10) with a circumferential edge (14), which reaches into the opening (10) and behind which an undercutting area (15) is formed, and
- joining the closing element (11) into the opening (10) so that the bottom (12) points inwards, and
- widening the surrounding border (13) in the undercutting area (15), so that
- the closing element (11) pressure-tight closes the inner space (18) of the door actuator.

2. The method according to claim 1, **characterized in that** widening the surrounding border (13) is performed by plastically changing the shape.

3. The method according to claim 1 or 2, **characterized in that** a tool (16) is provided, with which the surrounding border (13) is widened, in particular **in that** the tool (16) is pressed into the pot-shaped closing element (11).

4. The method according to any of the claims 1 to 3, **characterized in that** a sealing element (17) is provided, which is inserted into the opening (10) prior to joining the closing element (11).

5. The method according to any of the aforementioned claims, **characterized in that** sheet metal is machined in a deep-drawing process for providing the pot-shaped closing element (11), in order to embody the same with the bottom (12) and the surrounding border (13) and/or **in that** the circumferential edge (14), which borders the opening (10), with the undercutting area (15) is inserted into the housing (1) of the door actuator by means of a casting process or by means of a cutting process.

6. A door actuator with a housing (1), in which an opening (10) is fitted and wherein a closing element (11) is provided for inserting into the opening (10), **characterized in**
- **that** the closing element (11) is formed pot-shaped and includes a bottom (12) and a surrounding border (13) projecting from the extension plane of the bottom (12), and
- **that** the opening (10) includes a circumferential edge (14), which reaches into the former, and behind which an undercutting area (15) is formed,
- wherein the closing element (11) with the bottom pointing inwards is inserted into the opening (10) and wherein the surrounding border (13) is guided in the undercutting area (15) by widening.

7. The door actuator according to claim 6, **characterized in that** the closing element (11) is formed from metallic material, wherein the surrounding border (13) is guided into the undercutting area (15) by plastically changing the shape of the closing element (11).

8. The door actuator according to claim 6 or 7, **characterized in that** a sealing element (17), which in particular is formed as an annular O-ring seal, is disposed between the opening (10) and the closing element (11).

9. The door actuator according to any of the claims 6 to 8, **characterized in that** the closing element (11) pressure-tight closes an interior space (18) of the door actuator, which space is in particular filled with a pressure medium.

## Revendications

1. Méthode pour fermer une ouverture (10) dans un boîtier (1) d'un actionneur de porte, un élément de fermeture (11) étant mis à disposition à cet effet, lequel est inséré dans l'ouverture (10), **caractérisée en ce que** la méthode comporte par les étapes suivantes :
- mettre à disposition l'élément de fermeture (11) avec une formation en pot, de sorte que l'élément de fermeture (11) comprend un fond (12) et un bord (13) entourant faisant saillie du plan d'extension du fond (12),
- aménager l'ouverture (10) avec une arête circonférentielle (14), qui se dresse dans l'ouverture (10) et derrière laquelle arête est aménagée une région de contre-dépouille (15), et
- joindre l'élément de fermeture (11) dans l'ouverture (10) de sorte que le fond (12) pointe vers l'intérieur, et
- élargir le bord (13) entourant vers la région de contre-dépouille (15), de sorte que
- l'élément de fermeture (11) ferme de façon étanche à la pression un espace intérieur (18) de l'actionneur de porte.

2. Méthode selon la revendication 1, **caractérisée en ce que** l'élargissement du bord (13) entourant se fait par déformation plastique.

3. Méthode selon la revendication 1 ou 2, **caractérisée en ce qu'**un outil (16) est prévu, avec lequel le bord (13) entourant est élargi, tout particulièrement en ce l'outil (16) est pressé dans l'élément de fermeture (11) en forme de pot.

4. Méthode selon l'une des revendications 1 à 3, **caractérisée en ce qu'**au moins un élément d'étanchéité (17) est mis à disposition, lequel est inséré dans l'ouverture (10) avant de joindre l'élément de fermeture (11).

5. Méthode selon l'une des revendications mentionnées ci-avant, **caractérisée en ce qu'**une tôle est emboutie pour la mise à disposition de l'élément de fermeture (11), pour aménager ce dernier avec le fond (12) et avec le bord (13) entourant et/ou **en ce que** l'arête circonférentielle (14) formant le bord de l'ouverture (10) avec la région de contre-dépouille (15) est introduite dans le boîtier (1) de l'actionneur de porte par un procédé de coulage ou par un procédé d'enlèvement de copeaux.

6. Actionneur de porte avec un boîtier (1), dans lequel est aménagée une ouverture (10) et un élément de fermeture (11) étant prévu pour l'insertion dans l'ouverture (10), **caractérisé en ce**
- **que** l'élément de fermeture (11) est aménagé en forme de pot et comprend un fond (12) et un bord (13) entourant faisant saillie du plan d'extension du fond (12), et
- **que** l'ouverture (10) comprend une arête circonférentielle (14) se dressant dans cette ouverture (10), derrière laquelle arête est aménagée une région de contre-dépouille (15),
- l'élément de fermeture (11) avec le fond montrant vers l'intérieur est joint dans l'ouverture (10) et le bord entourant (13) est guidé dans la région de contre-dépouille (15) par l'élargissement.

7. Actionneur de porte selon la revendication 6, **caractérisé en ce que** l'élément de fermeture (11) est aménagé en matière métallique, le bord (13) entourant étant guidé par déformation plastique de l'élément de fermeture (11) dans la région de contre-dépouille (15).

8. Actionneur de porte selon la revendication 6 ou 7, **caractérisé en ce qu'**un élément d'étanchéité (17), qui est aménagé tout particulièrement comme anneau torique, est agencé entre l'ouverture (10) et l'élément de fermeture (11).

9. Actionneur de porte selon l'une des revendications 6 à 8, **caractérisé en ce que** l'élément de fermeture (11) ferme de façon étanche à la pression un espace intérieur (18) de l'actionneur de porte, espace étant rempli tout particulièrement de moyen de pression.
